Europäisches Patentamt

European Patent Office

Office européen des brevets

(19)

(11) Veröffentlichungsnummer: **0 021 452**
**B1**

# (12) EUROPÄISCHE PATENTSCHRIFT

(45) Veröffentlichungstag der Patentschrift:
**14.12.83**

(21) Anmeldenummer: **80103899.3**

(22) Anmeldetag: **09.07.80**

(51) Int. Cl.³: **B 60 K 17/08**, F 16 H 33/06

(54) **Stufenloses lastabhängiges Federgetriebe.**

(43) Veröffentlichungstag der Anmeldung:
**07.01.81 Patentblatt 81/1**

(45) Bekanntmachung des Hinweises auf die Patenterteilung:
**14.12.83 Patentblatt 83/50**

(84) Benannte Vertragsstaaten:
**AT CH DE FR GB IT LI NL SE**

(56) Entgegenhaltungen:
**AT - B - 171 790**
**CH - A - 87 259**
**DE - A - 2 137 019**
**DE - C - 408 837**
**FR - A - 60 996**
**GB - A - 1 188 904**

(73) Patentinhaber: **Schnell, Joachim, Dr., Amselweg 7,**
**D-6348 Herborn 4 (DE)**

(72) Erfinder: **Schnell, Joachim, Dr., Amselweg 7,**
**D-6348 Herborn 4 (DE)**

EP 0 021 452 B1

# Stufenloses lastabhängiges Federgetriebe

Die Erfindung bezieht sich auf stufenlose lastabhängige Getriebe, die mit Hilfe von Energiespeicherung in elastisch verformbaren Vorrichtungen arbeiten und deshalb im folgenden kurz Federgetriebe genannt werden, und die Drehbewegungen oder periodische Hin- und Herbewegungen oder eine Kombination von beiden in Drehbewegungen übersetzen, wobei die Feder in mehreren parallel arbeitenden Vorrichtungen periodisch lastabhängig gespannt und entspannt werden.

Stufenlose lastabhängige Getriebe werden in Kraftfahrzeugen und anderen Maschinen eingesetzt, um Motordrehzahl und -drehmoment oder Motorschubkraft, -amplitude und -frequenz in die benötigte Nutzdrehzahl und -drehmoment zu übersetzen.

Stufenlose Getriebe, deren Übersetzung lastabhängig oder lastabhängig einstell- oder regelbar ist, sind in mehreren Ausführungen bekannt. Stufenlose Reibradgetriebe oder Keilriemengetriebe haben wegen hoher Schlupfverluste einen schlechten Wirkungsgrad. Hydrodynamische Drehmomentwandler haben nur in einem engen Übersetzungsbereich einen guten Wirkungsgrad. Sie werden deshalb häufig mit Schaltgetrieben und einer automatischen Stufenumschaltung kombiniert. Diese bei Kraftfahrzeugen häufig verwendeten aufwendigen und komplizierten automatischen Getriebe erreichen aber nicht den guten Wirkungsgrad von handgeschalteten Stufengetrieben.

Einen guten Wirkungsgrad erreichen stufenlose lastabhängige Federgetriebe, bei denen die Antriebsenergie wenigstens teilweise vorübergehend in Federn gespeichert wird. Die beim Spannen und Entspannen von Stahlfedern auftretenden Verluste sind vernachlässigbar klein, sodass sich die Verluste in Federgetrieben auf unvermeidliche Reibungsverluste beschränken. Stufenlose lastabhängige Federgetriebe sind in vielen Versionen aus den Patentschriften US-A-1481279, DE-C-1151998, DE-C-334133, DE-C-338945, DE-C-408837, GB-A-1188904, DE-A-2137019 und CH-A-87259 bekannt. Bei allen Federgetrieben schwankt die Antriebs- und die Abtriebsleistung im Sinne der Federspannung und -entspannung, ausserdem ist durch die Energiespeicherung in den Federn kein unmittelbarer Zusammenhang zwischen der momentanen Antriebs- und Abtriebsleistung gegeben. Stufenlose lastabhängige Federgetriebe, bei denen diese Nachteile klein und für die meisten Anwendungsfälle vernachlässigbar werden, enthalten mehrere in Bezug auf die Abtriebswelle parallel arbeitende gleichaltrige Vorrichtungen, von denen jede die Antriebsbewegung in eine periodische Hin- und Herbewegung umwandelt und entweder die Bewegung in einer Richtung oder die Bewegung in beiden Richtungen bei Richtungsumkehr einer der Richtungen auf die eine Drehbewegung ausführende Abtriebswelle überträgt, wobei die drehenden und die hin und herbewegenden Getriebeteile über Federn so miteinander verbunden sind, dass die Federn periodisch lastabhängig gespannt und entspannt werden und die parallel arbeitenden Vorrichtungen so angeordnet sind oder gesteuert werden, dass die in ihnen enthaltenen Federn sich beim Betrieb des Getriebes in unterschiedlichen Spannungs-, Entspannungs oder Leerlaufstadien befinden. Bekannte Federgetriebe mit diesen Merkmalen haben aber eine ungünstige Getriebecharakteristik, das mittlere Antriebsdrehmoment hat bei einer bestimmten Drehzahlübersetzung ein Maximum, man muss also bei unterschiedlichen Drehzahlübersetzungen mit unterschiedlichen Drehmomenten und Drehzahlen antreiben. Das ist für die meisten Antriebsmotoren ungünstig, weil der Bereich, in dem der Motor mit gutem Wirkungsgrad läuft nur in einem engen Drehzahlübersetzungsbereich ausgenutzt werden kann. Wegen dieses Nachteils ist die Verwendung von bekannten Federgetrieben trotz ihres guten Wirkungsgrades in vielen Anwendungsfällen, z.B. in Kraftfahrzeugen, nicht vorteilhaft, weil der Gesamtwirkungsgrad der Motor-Federgetriebe-Kombination nicht gut ist.

Aufgabe der Erfindung ist die Entwicklung eines stufenlosen, lastabhängigen Federgetriebes, das einen guten Wirkungsgrad hat, eine geringe Schwankung von Antriebs- und Abtriebsleistung und einen fast unmittelbaren Zusammenhang von momentaner Antriebs- und Abtriebsleistung aufweist und in einem weiten Drehzahlübersetzungsbereich mit wenigstens annähernd konstantem Antriebsdrehmoment betrieben werden kann.

Erfindungsgemäss wird die Aufgabe dadurch gelöst, dass ein stufenloses lastabhängiges Federgetriebe zur Übersetzung von Drehbewegungen oder periodischen Hin- und Herbewegungen oder einer Kombination von beiden in Drehbewegungen mit mindestens einer Abtriebswelle und mehreren in Bezug auf die Abtriebswelle parallel arbeitenden gleichaltrigen Vorrichtungen, von denen jede die Antriebsbewegung in eine periodische Hin- und Herbewegung umwandelt und entweder die Bewegung in einer Richtung oder die Bewegung in beiden Richtungen bei Richtungsumkehr einer der Richtungen auf die eine Drehbewegung ausführende Antriebswelle überträgt, wobei die drehenden und die hin und her bewegten Getriebsteile über Federn elastisch so miteinander verbunden sind, dass die Federn periodisch lastabhängig gespannt und entspannt werden, und die parallel arbeitenden gleichartigen Vorrichtungen so angeordnet sind oder gesteuert werden, dass die in ihnen enthaltenen Federn sich beim Betrieb des Getriebes in unterschiedlichen Spannungs-, Entspannungs- oder Leerlaufstadien befinden, mit Federn bestückt wird, die wenigstens angenähert eine der folgenden Charakteristiken haben:

1. eine progressive Charakteristik
2. eine von einer Vorspannung ausgehende progressive Charakteristik

3. eine S-förmige Charakteristik mit einer Steigung, die mit zunehmender Auslängung zunächst abnimmt und dann wieder zunimmt.

Bevorzugte Ausführungsformen der Erfindung sind in den Unteransprüchen gekennzeichnet.

Ein Federgetriebe mit den im Oberbegriff angeführten Merkmalen arbeitet folgendermassen:

Bei Betrieb mit konstantem Antrieb und konstanter Last führt jede der parallel arbeitenden Vorrichtungen zeitlich versetzt die gleiche Bewegung durch: In der Federspannungsphase (Hinbewegung) wird die Antriebsenergie zum Spannen der Feder und zur Bewegung der Abtriebswelle benutzt, in der Entspannungsphase (Herbewegung) wird die in der Feder gespeicherte Energie teilweise zur Bewegung der Abtriebswelle benutzt und teilweise an den Antrieb zurückgegeben. Durch mehrere zeitlich versetzt arbeitende Vorrichtungen kommt eine quasikontinuirliche Kraftübertragung zustande, die umso gleichmässiger wird, je mehr parallel arbeitende Vorrichtungen verwendet werden. Abgesehen von Reibungsverlusten und den sehr geringen Federverlusten ist die Abtriebsleistung im Mittel gleich der Antriebsleistung.

Bei geringer Last werden die Federn nur wenig oder gar nicht gespannt, die Antriebsbewegung wird voll oder fast voll auf die Abtriebswelle übertragen, die Abtriebsdrehzahl ist gross. Bei grosser Last werden die Federn stark gespannt, dadurch ist das Abtriebsdrehmoment gross. Von der Antriebsgeschwindigkeit bleibt aber nur noch wenig für die Abtriebswelle übrig, die Abtriebsdrehzahl ist klein.

Bei plötzlicher Änderung von Antrieb oder Abtrieb stellte sich in weniger als einer Umdrehung der Antriebswelle bzw. in weniger als einer Antriebsschwingung der neue Gleichgewichtszustand ein. Die Umstellungszeit ist so kurz, dass man von einem unmittelbaren Zusammenhang zwischen Antriebs- und Abtriebsleistung sprechen kann. Getriebe mit den im Oberbegriff angeführten Merkmalen arbeiten nach einer Getriebecharakteristik, bei der sich das Antriebs- und das Abtriebsdrehmoment als Funktion der Drehzahlübersetzung darstellen lassen. Es zeigt sich, dass nur bei Verwendung von erfindungsgemässen Federn mit progressiver oder S-förmiger Charakteristik Getriebecharakteristiken realisiert werden können, die in einem weiten Drehzahlübersetzungsbereich ein konstantes Antriebsdrehmoment aufweisen.

Der Vorteil erfindungsgemässer Federgetriebe gegenüber den in Kraftfahrzeugen und anderen Maschinen eingesetzten stufenlosen lastabhängigen steuerbaren Getrieben liegt vor allem in ihrem sehr guten Wirkungsgrad und in ihrem einfachen Aufbau. Der Vorteil erfindungsgemässer Federgetriebe gegenüber den bekannten, bisher aber industriell nicht eingesetzten Federgetrieben liegt in ihrer guten Getriebecharakteristik. Dadurch werden Motor-Federgetriebe-Kombinationen möglich, die in einem weiten Übersetzungsbereich mit sehr guten Gesamtwirkungsgrad arbeiten und deshalb insbesondere für den Einsatz in Kraftfahrzeugen und anderen Maschinen, bei denen es auf sparsamen Energieverbrauch ankommt, geeignet sind.

Zur Beschreibung der Erfindung sind 17 Zeichnungen beigefügt:

Figur 1 zeigt den Aufriss und

Figur 2 den Grundriss eines Kurbelschwingen-Federgetriebes mit acht Zugfedern

Figur 3 zeigt die Getriebecharakteristik von Federgetrieben mit linearer Federcharakteristik.

Figur 4 stellt verschiedene Federcharakteristiken dar und

Figur 5 die daraus resultierende Getriebecharakteristiken.

Figur 6 zeigt eine Federgetriebekonstruktion mit Zahnhalbscheiben 9 und sechs gewundenen Biegefedern und

Figur 7 deren Getriebecharakteristik bei Verwendung von linearen Federn.

Figur 8 zeigt eine Federgetriebekonstruktion mit Steuerzahnrädern.

Figur 9 zeigt progressive Federcharakteristiken für Getriebe nachFigur 6 und Figur 8 und

Figur 10 die daraus resultierende Getriebecharakteristiken.

Figur 11 zeigt eine Kombination aus drei gewundenen Biegefedern.

Figur 12 zeigt einen Vergleich der Zugkraft-Geschwindigkeits-Diagramme von Personenwagen mit Federgetrieben und mit hydrodynamischen Drehmomentwandlern.

Figur 13 zeigt Zugkraft-Geschwindigkeits-Diagramme von Personenwagen mit Federgetrieben bei unterschiedlichen Motordrehzahlen.

Figur 14 zeigt ein Federgetriebe mit einer Antriebs- und zwei Abtriebswellen.

Figur 15 zeigt ein Federgetriebe in der Bauform eines Planetengetriebes.

Figur 16 zeigt die Kombination von Federgetrieben mit einem Verteilergetriebe.

Figur 17 zeigt einen Schwingmotor mit einfachem Federgetriebe.

Die Erfindung wird im folgenden anhand von dreizehn Ausführungsbeispielen beschrieben:

Beispiel 1

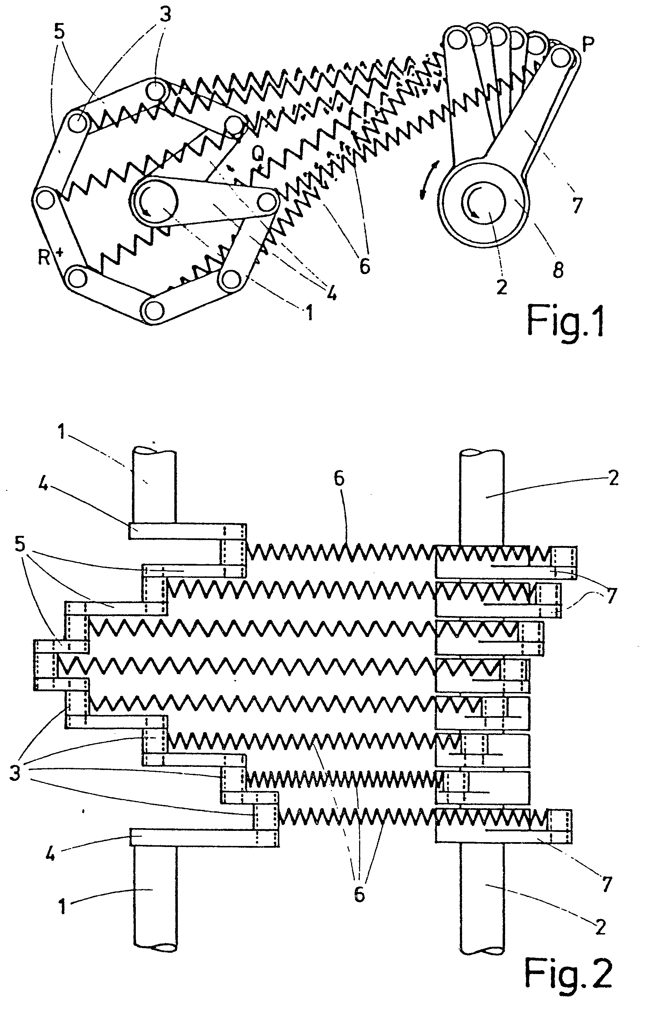

In den Figuren 1 und 2 ist ein Federgetriebe skizziert, das acht parallelarbeitende Vorrichtungen enthält, die nach dem Prinzip der Kurbelschwinge arbeiten. Die Drehbewegung der Antriebswelle 1 wird von acht Kurbeln übernommen, deren rotierende Drehgelenke 3 in gleichmässigem Abstand von der Antriebswelle jeweils um den Winkel von 45° versetzt axial nebeneinander angeordnet sind. Die Kurbelglieder 4 sind nur noch bei der ersten und der letzten Kurbel explizit vorhanden, sonst sind die Kurbeln durch stabile Stege 5 miteinander verbunden. Jede der Kurbeln bewegt über eine Zugfeder 6 eine Schwinge 7, die über einen Freilauf 8 mit der Abtriebswelle 2 verbunden ist. Der Freilauf 8 fasst, wenn die Drehzahl $n_7$ der Schwinge 7 grösser oder gleich der Drehzahl $n_2$ der Abtriebswelle 2 ist, sonst läuft er frei.

Bei Betrieb mit minimaler Last im in Figur 1 angehenden Richtungssinn werden die Federn 6 nur wenig gespannt, die Schwingen 7 durchlaufen nacheinander ihre volle Bahn fast so, als ob die Kopplung zwischen Kurbeln und Schwingen starr wäre. Von der ungleichmässigen Geschwindigkeit der Schwingen 7 wird nur ein kleiner Teil auf die Abtriebswelle 2 übertragen, da jeweils nur der Freilauf 8 fasst, dessen Schwinge 7 die grössere Geschwindigkeit hat. Bei der Rückwärtsbewegung einer Schwinge 7 läuft der Freilauf 8 frei und die Feder 6 wird auf Druck beansprucht. Diese Beanspruchung ist aber nur gering und bei leichter Bauweise der Schwinge 7 reicht die Steifigkeit einer dicht gewundenen Zugfeder aus, um die Schwinge 7 in die Ausgangsposition P zurückzuschieben. Bei minimaler Last ist bei den in den Figuren 1 und 2 gewählten Abmessungen die Drehzahlübersetzung, also das Verhältnis der Drehzahl $n_2$ der Abtriebswelle zur Drehzahl $n_1$ der Antriebswelle 1 ungefähr 0,67.

Bei Betrieb mit grösserer Last werden die Federn 6 nacheinander mehr und mehr gespannt, bis das erforderliche Abtriebsdrehmoment erreicht ist. Die Schwingen 7 bewegen sich nur noch auf einem Teilstück ihrer möglichen Bahn, in dem in den Figuren 1 und 2 eingezeichneten Fall ist es etwa die Hälfte. Die Drehzahlübersetzung ist dabei auf etwa 0,15 reduziert.

Zur Verdeutlichung der Wirkungsweise wird zunächst eine Kurbelschwinge betrachtet. Die Schwinge 7 befindet sich in der entferntesten Lage, der Ausgangsposition P, und das zugehörige Kurbeldrehgelenk im Punkte Q. Bei Bewegung des Drehgelenks 3 in dem in Figur 1 eingezeichneten Drehsinn wird zunächst von der Schwinge 7 ein kleiner Winkel im Leerlauf zurückgelegt, bis der Freilauf 8 greift und die Antriebsenergie zum Spannen der Feder 6 und zur Bewegung der Antriebswelle 2 benutzt wird. Der Federspannungsvorgang ist beendet, wenn das Kurbeldrehgelenk 3 seinen äussersten Punkt R erreicht. Die gespannte Feder 6 treibt nun mit ihrer gespeicherten Energie weiter die Antriebswelle 2 und gibt gleichzeitig über die Kurbel Energie an die Antriebswelle 1 zurück, bis sie voll entspannt ist. Dann läuft der Freilauf 8 frei und die Kurbel drückt die Schwinge 7 mit der Feder 6 in die Ausgangsposition P zurück.

Bei Betrieb mit grösserer Last befinden sich stets einige der parallel arbeitenden Feder-Kurbelschwingen in verschiedenen Stadien der Federspannungsphase, andere in verschiedenen Stadien der Entspannungsphase und wenige im Leerlauf. Insgesamt ergibt sich ein quasikontinuirlicher Lauf von Antriebswelle 1 und Abtriebswelle 2, der umso gleichmässiger ist, je mehr parallel arbeitende versetzt angeordnete Feder-Kurbelschwingen im Getriebe enthalten sind.

Mit wachsender Last werden die Leerlaufphasen immer kürzer. Bei stehender Abtriebswelle 2 ist keine Leerlaufphase mehr vorhanden, die Schwingen 7 bleiben alle in ihrer Ausgangsposition P stehen und die Federn 6 werden durch die Kurbeln auf ihre maximale Länge gespannt und wieder entspannt. Bis auf die Startphase läuft der Antrieb dabei im Leerlauf, die zum Spannen der Hälfte der Federn 6 benötigte Energie wird durch die Entspannung der anderen Hälfte der Federn 6 geliefert.

Die Getriebecharakteristik, die den Zusammenhang zwischen Antriebsdrehmoment $M_1$, Abtriebsdrehmoment $M_2$ und den Antriebs- und Abtriebsdrehzahlen $n_1$ und $n_2$ beschreibt, ist von der Konstruktion der Kurbelschwingen und der Federcharakteristik abhängig. Die Federcharakteristik beschreibt den Zusammenhang zwischen Federkraft und Federlänge, der bei einer gewundenen Zugfeder meist linear verläuft. Die Federn können in zusammengezogenem Zustand bereits eine Vorspannung haben, oder eine Vorspannung kann durch Abstandsstifte erzwungen werden, sodass die Federn eine minimale Länge nicht unterschreiten können.

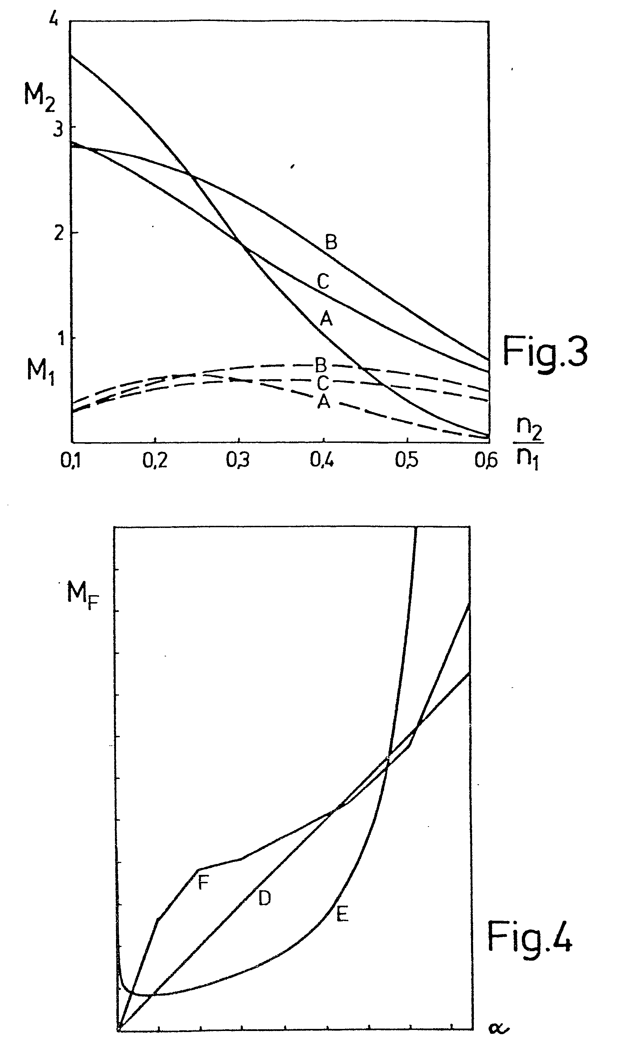

Figur 3 zeigt typische Getriebecharakteristiken bei linearer Federcharakteristik. Als ausgezogene Kurve ist jeweils das absolute mittlere Abtriebsdrehmoment $M_2$ und als gestrichelte Kurve das mittlere Antriebsdrehmoment $M_1$ als Funktion der Drehzahlübersetzung $n_2/n_1$ angegeben. Die Kurven A und B wurden bei Getrieben bestimmt, bei denen das Verhältnis der Länge des Schwingengliedes $r_7$ zur Länge des Kurbelgliedes $r_4$ den Wert $r_7/r_4=1,5$, das Verhältnis des Abstandes b der Mitten von Antriebswelle 1 und Abtriebswelle 2 zur Kurbellänge $r_4$ den Wert $b/r_4=3$ und das Verhältnis der Federlänge 1 in zusammengezogenem Zustand zur Kurbellänge $r_4$ ebenfalls den Wert $1/r_4=3$ hat. Die Kurven C gelten für Getriebe, bei denen $r_7/r_4=1,5$, $b/r_4=3$ und $1/r_4=2,6$ ist. Bei den Kurven A ist die Federkonstante um den Faktor 4 grösser als bei den Kurven B und C, aber keine Federvorspannung vorhanden. Bei den Kurven B und C wurden Federn mit starker Vorspannung gewählt, die bei der Federlänge 1 bereits auf den dreifachen Wert ihrer theoretischen spannungslosen Länge ausgezogen sind. Federn 6 mit hoher Vorspannung führen zu einer stärkeren Schwankung von Drehmoment und Drehzahl als solche mit geringer oder fehlender Vorspannung. Wird bei dem in den Figuren 1 und 2 skizzierten Federgetriebe die Antriebswelle 1 und damit die Kurbeln entgegen dem eingezeichneten Drehsinn bewegt, so ergibt sich kein prinzipieller Unterschied im Getriebeverhalten. Die Drehrichtung der Abtriebswelle 2 ist durch die Freiläufe 8 festgelegt. Die Getriebecharakteristik ist allerdings von der Drehrichtung der Antriebswelle 1 abhängig.

Die Federn 6 in den Figuren 1 und 2 können auch Druckfedern sein. Wenn die Drehrichtung der Freiläufe 8 umgekehrt wird, funktioniert das Druckfeder-Kurbelschwingengetriebe wie das oben beschriebene.

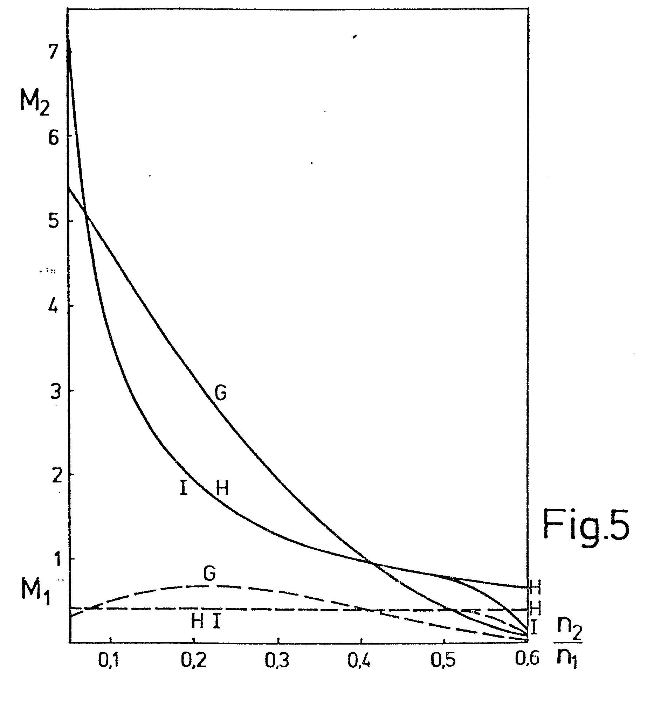

Bei stufenlosen Federgetrieben, bei denen die Drehbewegung der Antriebswelle 1 durch parallel arbeitende Kurbelschwingen in Hin- und Herbewegungen umgewandelt wird und die Abtriebswelle 2 durch diese Hin- und Herbewegungen über Freiläufe 8 in einer Drehrichtung bewegt wird, können sich die Federn 6 an verschiedenen Stellen zwischen Antriebswelle 1 und Abtriebswelle 2 befinden, es kann z.B. die Schwinge 7 als Blattfeder oder Spiralfeder ausgebildet sein. Die Federkopplung kann auch über Zwischenwellen oder Hilfsvorrichtungen erfolgen, wenn nur sichergestellt ist, dass die Federn 6 beim Betrieb des Getriebes periodisch lastabhängig gespannt und entspannt werden. Für ein Federgetriebe, bei dem die Kurbelschwingen starr ausgeführt sind und Spiralfedern oder gewundene Biegefedern zwischen der Schwinge 7 und dem Freilauf 8 angebracht sind, ergibt sich bei linearer Federcharakteristik (Kurve D in Figur 4) die in Figur 5 durch die Kurven G wiedergegebene Getriebecharakteristik. In Figur 5 sind wieder wie in Figur 3 das absolute mittlere Abtriebsdrehmoment $M_2$ als ausgezogene Kurve und das mittlere Antriebsdrehmoment $M_1$ als gestrichelte Kurve als Funktion der Drehzahlübersetzung $n_2/n_1$ wiedergegeben. Die Abmessungsverhältnisse der Kurbelschwingen sind in Figur 5 die gleichen wie die, die zu Kurven A und B in Figur 3 führen. Bei allen Federgetrieben, die ähnlich wie die bisher beschriebenen nach dem Prinzip der Kurbelschwinge arbeiten, ergibt sich wie bei den Kurven A, B und C der Figur 3 und den Kurven G der Figur 5 eine ungünstige Getriebecharakteristik, wenn man Federn mit linearer Charakteristik verwendet. Im günstigsten Fall kann in einem Drehzahlübersetzungsbereich von 2 mit einem Antriebsdrehmoment gearbeitet werden, das um nicht mehr als 10% schwankt. Das ist für den Einsatz in Kraftfahrzeugen nicht ausreichend.

Eine ideale Getriebecharakteristik würde man erreichen, wenn man in dem zuletzt beschriebenen Federgetriebe die Spiralfedern oder gewundenen Biegefedern so ausbildet, dass ihre Charakteristik der Kurve E in Figur 4 entspricht. Damit ergäbe sich eine Getriebecharakteristik mit konstantem Antriebsdrehmoment $M_1$ über den gesamten Drehzahlübersetzungsbereich, wie sie durch die Kurven H in Figur 5 wiedergegeben ist.

Federcharakteristiken mit guter Annäherung an die Kurve E sind aber sehr schwer zu realisieren. Sie hätten ausserdem den Nachteil grosser Schwankungen von Drehmoment oder Drehzahl. Leicht zu realisieren sind progressive, annähernd hyperbelförmige Federcharakteristiken, wie sie im Beispiel 2 beschrieben werden. Mit progressiven Federcharakteristiken werden Getriebecharakteristiken erreicht, die bei hoher Drehzahlübersetzung ein kleines Antriebsdrehmoment aufweisen, unterhalb einer bestimmten Drehzahlübersetzung aber mit praktisch konstantem Antriebsdrehmoment arbeiten. Progressive Federcharakteristiken mit hoher Federvorspannung führen zu relativ grossen Schwankungen von Drehmoment oder Drehzahl. Es hat sich gezeigt, dass S-förmige Federcharakteristiken, deren Federkraft von einer kleinen oder fehlenden Vorspannung ausgeht zunächst stark ansteigt, dann nur noch wenig steigt oder sogar abnimmt und schliesslich zunehmend stärker steigt und in einem hyperbelförmigen Ast ausläuft, zu Getriebecharakteristiken führen, die ebenfalls unterhalb einer bestimmten Drehzahlübersetzung mit praktisch konstantem Antriebsdrehmoment arbeiten. Die Schwankungen von Drehmoment oder Drehzahl sind bei erfindungsgemässen Federgetrieben mit S-förmiger Federcharakteristik relativ gering. S-förmige Federcharakteristiken lassen sich z.B. mit Tellerfedern realisieren oder auch durch mehrere nacheinander greifende Federn mit linearer Charakteristik. Ein mit sechs derartigen Federn arbeitendes Getriebe, dessen Federcharakteristik in Figur 4 durch die Kurve F wiedergegeben ist, hat eine in den Kurven I in Figur 5 entsprechende Getriebecharakteristik.

Beispiel 2

Im Beispiel 1 werden erfindungsgemässe Federgetriebe beschrieben, bei denen die Umwandlung der Antriebsdrehbewegung in Hin- und Herbewegungen durch Kurbelschwingen erfolgt, weil diese technisch einfach sind und ausserdem durch die sanfte Umkehr der Schwingen die Materialbeanspruchung gering ist. Für eine gute Getriebecharakteristik und einen gleichmässigen Getriebelauf ist aber eine abruptere Richtungsumkehr günstiger. Es sind sehr viele Getriebe bekannt, die Drehbewegungen in Hin- und Herbewegungen übersetzen, alle können in erfindungsgemässen Federgetrieben eingesetzt werden. Die Hin- und Herbewegungen können auf Kreisbahnabschnitten erfolgen wie im Beispiel 1, oder auf vollen Kreisbahnen (Parallelkurbel), wobei durch Hilfsfedern eine Umkehr erzwungen wird, oder auf graden Bahnen (Gradschubkurbel) oder auf beliebig vorgegebenen Bahnen.

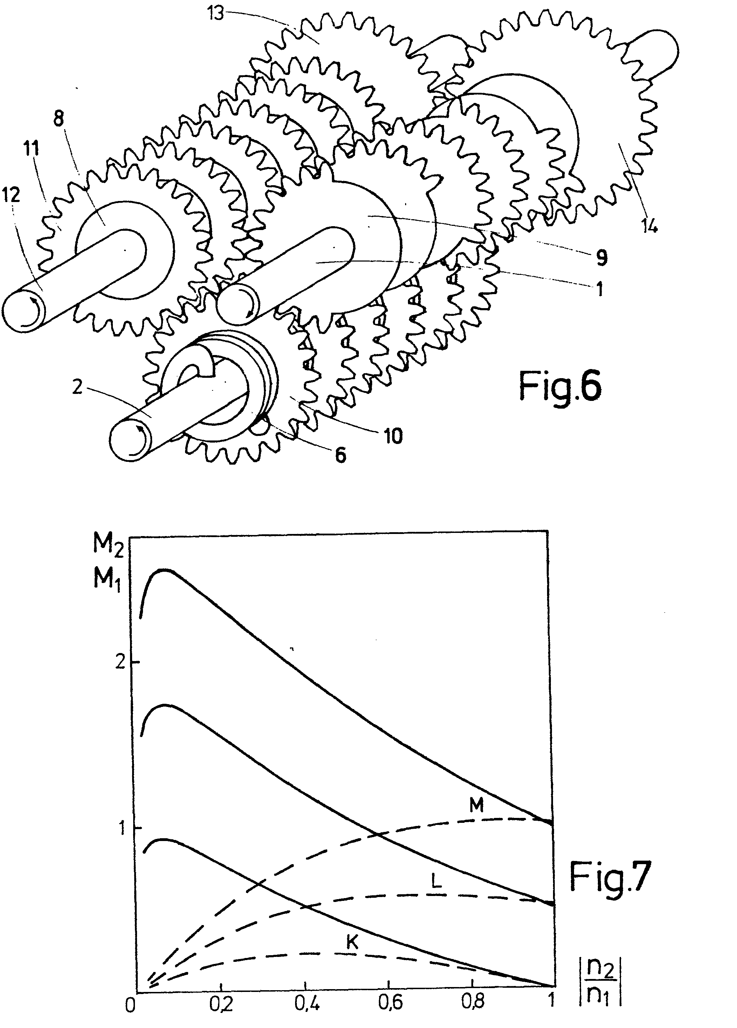

Auch Getriebe, mit denen eine Drehbewegung in eine andere Drehbewegung mit überlagerter Hin- und Herbewegung übersetzt wird, können in erfindungsgemässen Federgetrieben benutzt werden. Unter diesen Oberbegriff fallen auch Getriebe, die eine Drehbewegung in eine diskontinuirliche Drehbewegung umwandeln. Aus dieser Gruppe wird als zweites Beispiel eines erfindungsgemässen Federgetriebes eine relativ einfache Konstruktion mit sechs parallel arbeitenden Vorrichtungen herausgegriffen, die in Figur 6 skizziert ist. Auf der Antriebswelle 1 sitzen um jeweils 60° versetzt Zahnhalbscheiben 9, die in Zahnräder 10 eingreifen, die auf der Abtriebswelle 2 drehbar gelagert und über gewundene Biegefelder 6 mit der Abtriebswelle 2 elastisch verbunden sind. Die Zahnräder 10 greifen in Zahnräder 11, die über Freiläufe 8 mit einer Ausgleichswelle 12 verbunden sind. Die Ausgleichswelle 12 und die Antriebswelle 1 sind über die auf ihnen sitzenden Zahnräder 13 und 14 miteinander gekoppelt. Bei Betrieb des Getriebes wird die Antriebsenergie zum Spannen der Feder 6 und zur Bewegung der Abtriebswelle 2 benutzt, solange die Zahnhalbscheibe 9 im Eingriff mit dem zugehörigen Zahnrad 10 steht, der Freilauf 8 läuft dabei leer. Mit fortschreitender Bewegung verliert die Zahnhalbscheibe 9 den Kontakt mit dem Zahnrad 10 und die Entspannungsphase der zugehörigen Feder 6 beginnt: Die gespeicherte Federenergie wird teilweise zur Bewegung der Abtriebswelle 2 benutzt und teilweise über die Zahnräder 10 und 11, den nun fassenden Freilauf 8, die Ausgleichswelle 12 und die Zahnräder 13 und 14 an die Antriebswelle 1 zurückgegeben. Nach Entspannung der Feder 6 folgt eine kurze Leerlaufphase, bis die Zahnhalbscheibe 9 erneut in das Zahnrad 10 eingreift und eine neue Federspannungsphase beginnt.

Ist das Abtriebsdrehmoment kleiner als die Summe der Vorspannungsdrehmomente der gewundenen Biegefedern 6, die über ihr Zahnrad 10 mit der Zahnhalbscheibe 9 in Verbindung stehen, so werden die Federn 6 nicht gespannt und die Drehzahlübersetzung ist $n_2/n_1 = -1$. Bei grösserem Abtriebsdrehmoment $M_2$ werden die Federn 6 periodisch lastabhängig gespannt und die Drehzahlübersetzung wird absolut gesehen umso kleiner, je grösser das Abtriebsdrehmoment wird. Der Getriebelauf ist umso gleichmässiger, je mehr versetzt angeordnete parallel arbeitende Vorrichtungen vorhanden sind, die in diesem Beispiel durch die Zahnhalbscheiben 9, die Zahnräder 10 und 11, die Federn 6 und durch die Freiläufe 8 gebildet werden.

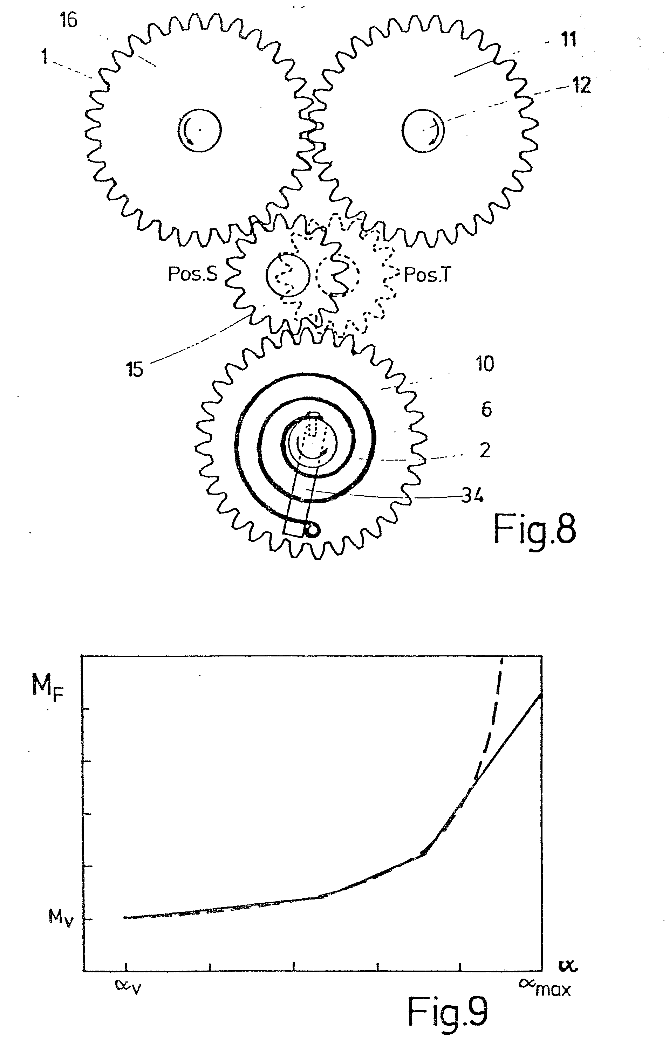

In Figur 7 sind die Getriebecharakteristiken von Federgetrieben dargestellt, die mit Federn mit linearer Charakteristik arbeiten. Vorausgesetzt sind dabei gleiche Abmessungen der Zahnhalbscheiben 9 und der Zahnräder 10 und 11. Bei den Kurven L und M wurden zwei verschiedene Federvorspannungen und bei den Kurven K die Vorspannung O vorausgesetzt. Wieder zeigt sich, dass diese Federgetriebe nur in einem begrenzten Bereich der Drehzahlübersetzung mit einem bestimmten, von der Motorcharakteristik her günstigen Antriebsdrehmoment $M_1$ betrieben werden können, wenn Federn mit linearer Charakteristik verwendet werden. Eine ideale Federcharakteristik für ein erfindungsgemässes Getriebe nach Beispiel 2 zeigt die gestrichelte Kurve in Figur 9; dargestellt ist das Federdrehmoment $M_F$ über dem Federöffnungswinkel $\alpha_v$ entspricht ein Federvorspannungsdrehmoment $M_v$. Beim maximalen Federöffnungswinkel $\alpha_{max}$ wird das Federdrehmoment unendlich gross.

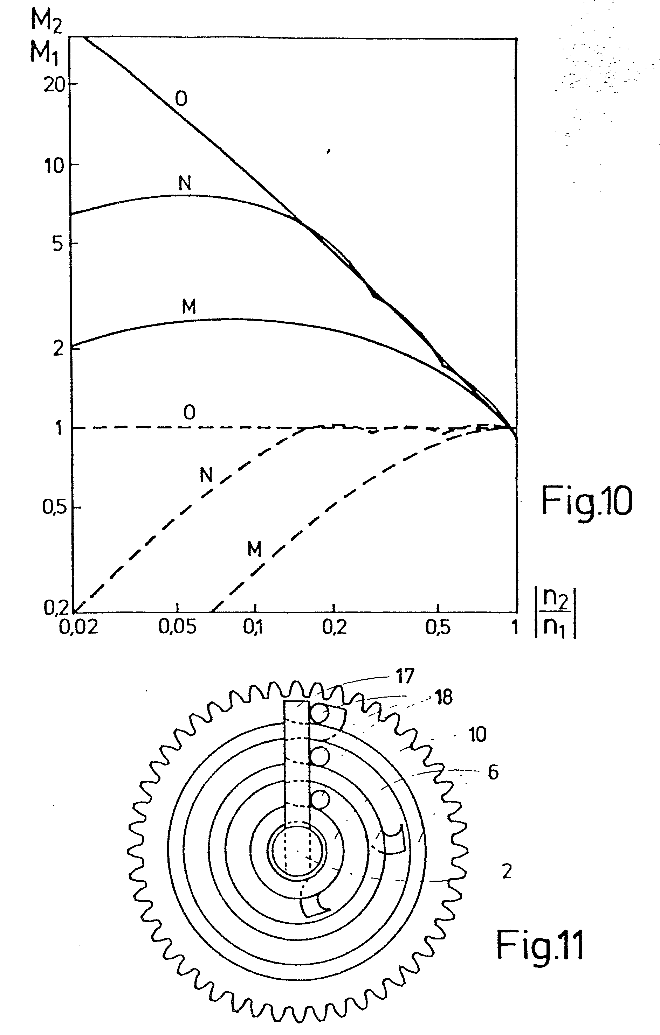

Die ideale Federcharakteristik nach Figur 9 führt zu einer Getriebecharakteristik, die in Figur 10 durch die mit O gekennzeichneten Kurfen wiedergegeben ist. Die ausgezogene Kurve gibt das mittlere Abtriebsdrehmoment $M_2$ und die gestrichelte Kurve das mittlere Antriebsdrehmoment $M_1$ über der Drehzahlübersetzung $n_2/n_1$ wieder. Es wurde eine doppelt logarithmische Darstellung gewählt, damit die Werte auch bei kleiner Drehzahlübersetzung deutlich werden. Zum Vergleich sind auch die mit M gekennzeichneten Kurven der Figur 7 in Figur 10 eingezeichnet, die auf einer linearen Federcharakteristik basieren. Aus den Kurven O ist zu entnehmen, dass bei hyperbelförmiger Federcharakteristik der Antriebsmotor im gesamten Übersetzungsbereich mit einem konstanten, von der Motorcharakteristik her günstigen Drehmoment betrieben werden kann. Je nach dem erforderlichen Abtriebsdrehmoment stellt sich das Getriebe stufenlos optimal ein.

Eine hyperbelförmige Federcharakteristik kann z.B. angenähert realisiert werden durch die Verwendung von mehreren Federn mit linearer Charakteristik, die während des Spannungsvorganges nacheinander zum Einsatz kommen. In Figur 11 ist eine Vorrichtung mit einer derartigen Federkombination skizziert, die aus drei gewundenen Biegefedern 6 besteht. Das eine Ende jeder der Federn 6 ist an einem Bolzen 17 befestigt, der auf der Abtriebswelle 2 sitzt. Die andern Federenden besitzen Haken, in die Bolzen 18 eingreifen, die sich auf dem Zahnrad 10 der parallel arbeitenden Vorrichtungen befinden. Die schwächste der Federn 6, die in Figur 11 als äussere Feder 6 gezeichnet ist, ist dauernd im Einsatz und im Regelfall mit einer Vorspannung versehen. Diese Feder ist massgebend bei kleinen Federöffnungswinkeln und grosser Drehzahlübersetzung. Mit zunehmendem Federöffnungswinkel greift zunächst die zweitstärkste mittlere Feder 6 und schliesslich die stärkste innere Feder 6. Die Summe der Federn 6 ist also massgebend bei grossem Federöffnungswinkel und kleiner Drehzahlübersetzung. Die Charakteristik einer aus drei nacheinander greifenden Federn bestehenden Federkombination ist in Figur 9 als ausgezogene Kurve wiedergegeben. Die Federkonstanten, die Vorspannung und die Federeinsatzpunkte wurden so gewählt, dass bis zu einem bestimmten Federöffnungswinkel die ideale gestrichelt gezeichnete Federcharakteristik recht gut angenähert wird. Die Summe der drei Federn entspricht einer Feder mit stark negativer Vorspannung. Aus der Charakteristik der drei nacheinander greifenden Federn ergibt sich eine Getriebecharakteristik, die in Figur 10 durch die mit N gekennzeichneten Kurven wiedergegeben wird.

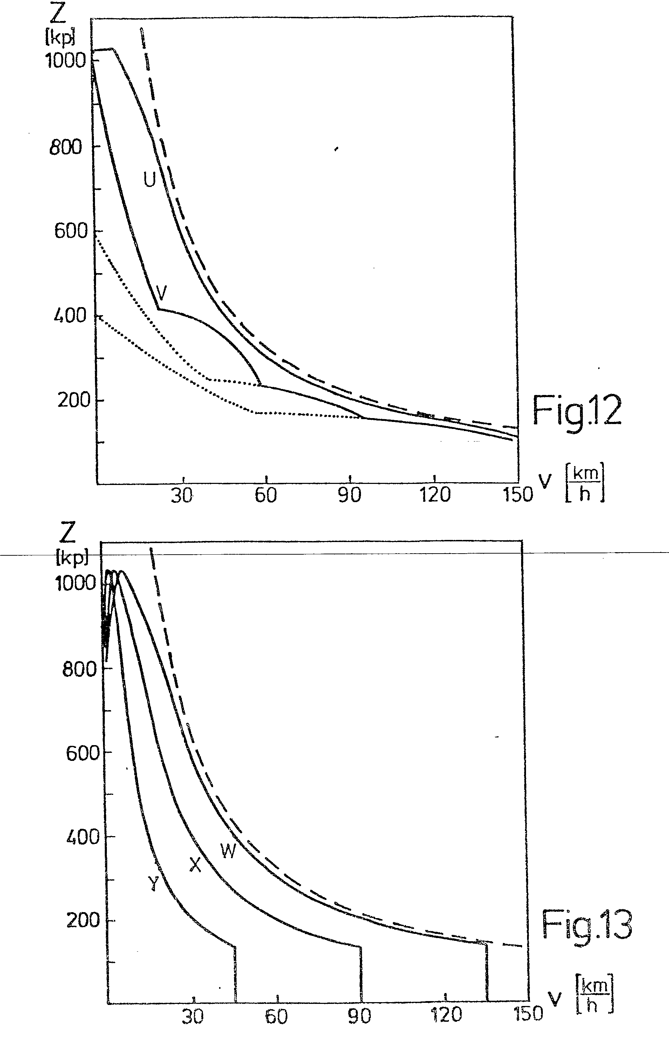

Legt man ein erfindungsgemässes Federgetriebe mit parallel arbeitenden Vorrichtungen, die je drei nacheinander greifende Federn 6 mit der in Figur 9 wiedergegebenen Charakteristik enthalten, so aus, dass das Getriebeantriebsdrehmoment $M_1$ dem Drehmoment eines Verbrennungsmotors von 72 PS bei maximaler Motorleistung entspricht, so erhält man bei Einsatz in einem Personenkraftwagen ein Zugkraft-Geschwindigkeitsdiagramm, das in Figur 12 durch die Kurve U wiedergegeben ist. Dargestellt ist die Zugkraft Z in kp über die Geschwindigkeit v in km/h. Voraussetzung für die Kurve U ist Motorvollastbetrieb bei Geschwindigkeiten über 20 km/h, bei kleineren Geschwindigkeiten Betrieb bei jeweils der Drehzahl, die zur grösstmöglichen Zugkraft führt. Zum Vergleich ist in Figur 12 als Kurve V das Zugkraft-Geschwindigkeitsdiagramm eingetragen für denselben Personenkraftwagen und denselben bei Vollast betriebenen Motor mit einem automatischen Getriebe, das aus einem hydrodynamischen Drehmomentwandler und einem Dreigangnachschaltgetriebe besteht. Die aus der maximalen Motorleistung berechnete ideale Zugkrafthyperbel ist in den Figuren 12 und 13 gestrichelt eingezeichnet. Es zeigt sich, dass das erfindungsgemässe Federgetriebe dem häufig in Personenkraftwagen eingesetzten automatischen Getriebe überlegen ist und bei Geschwindigkeiten über 20 km/h nahe an die ideale Zugkrafthyperbel herankommt. Ein Verbrennungsmotor kann über einen weiten Drehzahlbereich mit einem Drehmoment betrieben werden, das dem Drehmoment bei maximaler Leistung gleich ist. Der für die Kurven der Figuren 12 und 13 zugrunde gelegte 72 PS Motor kann bei Drehzahlen von 900 bis 4500 Umdrehungen pro Minute mit einem Drehmoment von 11,5 mkp betrieben werden. Bei 4500 Umdrehungen pro Minute erreicht er dabei seine maximale Leistung. In Figur 13 sind die Zugkraft-Geschwindigkeitsdiagramme bei einer Motorendrehzahl von 4500 U/min durch die Kurve W, bei 3000 U/min durch die Kurve X und bei 1500 U/min durch die Kurve Y wiedergegeben. Das erfindungsgemässe Getriebe nach Beispiel 2 arbeitet also in einem weiten Motordrehzahlbereich, insbesondere auch bei günstigem Motorwirkungsgrad. Bei Zugkräften unter 135 kp arbeitet es mit der Drehzahlübersetzung $n_2/n_1=1$ bei allen Motordrehzahlen. Das gilt auch für negatives Abtriebsdrehmoment bei Bergabfahrt oder beim Bremsen. Die Werte für den zugrunde gelegten Verbrennungsmotor, den Personenkraftwagen und das zum Vergleich herangezogene automatische Getriebe wurden dem Buch Zahnradgetriebe von Johannes Looman, 1970, Seiten 82 ff entnommen. Bei dem beschriebenen erfindungsgemässen Getriebe kann eine weitere Verbesserung dadurch erreicht werden, dass die Federvorspannung oder die Federcharakteristik so variiert werden, dass eine optimale Anpassung der Getriebecharakteristik an die Motorcharakteristik nicht nur bei maximaler Motorleistung, sondern auch bei anderen Zuständen, insbesondere bei optimalem Motorwirkungsgrad gegeben ist. Ein derartiges erfindungsgemässes Federgetriebe ist ein Drehmomentwandler, der innerhalb des Anpassungsbereiches ein gegebenes Antriebsdrehmoment $M_1$ und eine Antriebsdrehzahl $n_1$ umwandelt in ein gefordertes Abtriebsdrehmoment $M_2$ und eine Abtriebsdrehzahl $n_2$, wobei bei Vernachlässigung der Verluste die Beziehung $M_1{\cdot}n_1+M_2{\cdot}n_2=0$ gilt. Die Getriebecharakteristik kann man durch Abmessungsvariationen in weiten Grenzen variieren. Vergrössert man z.B. den Zahnbereich der Zahnscheibe 9 in Figur 6 bei sonst unveränderten Abmessungen, so wird die Spannungsphase auf Kosten von Entspannungs- und Leerlaufphase vergrössert und eine minimale Drehzahlübersetzung festgelegt. Wird diese unterschritten, so werden die Federn 6 nach einem Zyklus nicht mehr voll entspannt, es wird mehr und mehr Energie gespeichert, bis das Abtriebsdrehmoment zur Bewegung ausreicht oder der Antrieb stehen bleibt. Durch diese Getriebeauslegung kann man für kurze Zeit ein grosses Abtriebsdrehmoment und eine vergrösserte Abtriebsleistung erreichen, allerdings ist der unmittelbare Zusammenhang zwischen Antriebs- und Abtriebsleistung erst wieder gegeben, wenn die minimale Drehzahlübersetzung überschritten wird.

Beispiel 3

In den Beispielen 1 und 2 ist die Anordnung der parallel arbeitenden Vorrichtung so gewählt, dass sich die Federn 6 beim Betrieb des Getriebes in unterschiedlichen Arbeitsstadien befinden. In den Beispielen 3 und 4 werden erfindungsgemässe Getriebe vorgestellt, bei denen durch Steuerung der gleichartig angeordneten parallel arbeitenden Vorrichtungen sichergestellt wird, dass sich die Federn 6 beim Betrieb des Getriebes in unterschiedlichen Spannungs-, Entspannungs- oder Leerlaufstadien befinden. In Figur 8 ist ein erfindungsgemässes Getriebe skizziert, bei dem die Steuerung der parallel arbeitenden Vorrichtungen, von denen nur eine gezeichnet wurde, durch Steuerzahnräder 15 durchgeführt wird, die in drei verschiedene Positionen gebracht werden können. Während der Spannungsphase stellen sie den durch Pos.S gekennzeichneten Kontakt zwischen dem auf der Antriebswelle 1 sitzenden Zahnrad 16 und dem auf der Abtriebswelle 2 drehbar gelagerten Zahnrad 10 her, das über Federn 6 mit progressiver oder S-förmiger Charakteristik mit der Abtriebswelle 2 verbunden ist. Durch Umschalten des Steuerzahnrades 15 in die Pos.T wird die Entspannungsphase eingeleitet, während der das Steuerzahnrad 15 den Kontakt zwischen dem Zahnrad 10 und dem auf der Ausgleichswelle 12 sitzenden Zahnrad 11 herstellt, das in dauerndem Eingriff mit dem Zahnrad 16 steht. Wenn die Feder 6 voll entspannt ist, wird das Steuerrad 15 in eine Zwischenposition zwischen S und T gebracht, bis es bei Beginn der neuen Spannungsphase wieder in die Position S rückt. Die Positionsänderung des Steuerzahnrades 15 jeder parallel arbeitenden Vorrichtung erfolgt zeitlich versetzt gegenüber den anderen, sodass ein quasikontinuierlicher Getriebelauf erreicht wird. Die Getriebecharakteristik eines erfindungsgemässen Federgetriebes nach Beispiel 3 entspricht der eines Getriebes nach Beispiel 2, wenn die Zahnräder 10, 11 und 16 gleiche Abmessungen haben und die Steuerung so gewählt wird, dass die Federspannungsphase einer halben Umdrehung der Antriebswelle 1 entspricht.

Durch Änderung des Steuerungsmodus kann man die Getriebecharakteristik ändern. Eine Reduzierung der Eingriffszeit für den Spannungsvorgang führt z.B. zu einer Reduzierung der Drehzahlübersetzung. Die leichte Einflussnahme auf die Übersetzung ist von grossem praktischem Wert beim Einsatz des Getriebes in Kraftfahrzeugen: Beim langsamen Rangieren wählt man eine Steuerung, die schon bei kleinen Abtriebsdrehmomenten zu kleinen Drehzahlübersetzungen führt, für den kupplungslosen Stand mit laufendem Motor muss die Drehzahlübersetzung Null problemlos erreichbar sein. Beim Schnellstart mit Motorvollast wählt man eine Steuerung, die einen Betrieb des Motors im maximalen Leistungsbereich gestattet. Bei Dauerbetrieb kann man die Steuerung so anpassen, dass der Motor in einem Bereich guten Wirkungsgrades läuft. Die Beeinflussung der Getriebesteuerung kann von Hand oder automatisch erfolgen, z.B. in Abhängigkeit von Motorleistung, -drehzahl, -drehmoment und/oder Gashebelstellung.

Beispiel 4

Bei Getrieben, die den Beispielen 2 und 3 entsprechen, ist die Gefahr gegeben, dass bei Positionsänderungen der Steuerzahnräder 15 oder beim Einrasten der Zahnhalbscheibe 9 Zahn auf Zahn trifft. Diese Gefahr kann man durch verschiedene bekannte Massnahmen reduzieren, aber nur dann ganz beseitigen, wenn die Zahnräder in dauerndem Eingriff miteinander stehen und die Steuerung durch Schaltkupplungen erfolgt. Ersetzt man in Figur 6 die Zahnscheiben 9 durch Zahnräder, die auf der Antriebswelle 1 drehbar gelagert und mit ihr durch Schaltkupplungen verbunden sind, so kann man die Steuerung von Spannungs-, Entspannungs- und Leerlaufphase mit Hilfe dieser Schaltkupplungen vornehmen. Derartige erfindungsgemässe Federgetriebe haben dieselben vorteilhaften Eigenschaften, wie sie beim Beispiel 3 beschrieben wurden, ohne dass eine unerwünschte Zahnbelastung auftritt.

Beispiel 5

Pneumatische Federn haben eine progressive, hyperbelförmige Charakteristik. Sie können so ausgelegt werden, dass die damit hergestellten erfindungsgemässen Getriebe in einem weiten Übersetzungsbereich mit einem Antriebsdrehmoment arbeiten, das von der Motorcharakteristik her günstig ist. Durch einfache Massnahmen wie Druck- oder Volumenänderungen kann die Federcharakteristik oder die Federvorspannung eingestellt oder variiert oder das Antriebsdrehmoment des Getriebes an das Motordrehmoment angepasst werden.

Beispiel 6

Die Federcharakteristik beeinflusst die Charakteristik erfindungsgemässer Getriebe. Magnetische Federn lassen sich leicht mit den unterschiedlichsten Federcharakteristiken herstellen. Spezielle Anwendungsfälle, bei denen ungewöhnliche Getriebecharakteristiken erforderlich sind, lassen sich durch den Einsatz erfindungsgemässer Getriebe mit magnetischen Federn lösen.

Beispiel 7

In den Beispielen 1 bis 4 werden einfache Bauformen erfindungsgemässer Federgetriebe beschrieben, die eine Antriebswelle 1 und eine Abtriebswelle 2 besitzen. Die in den Beispielen beschriebenen Prinzipien lassen sich auf komplizierte Getriebe mit mehreren Antriebs-, Abtriebs-, und/oder Zwischenwellen übertragen.

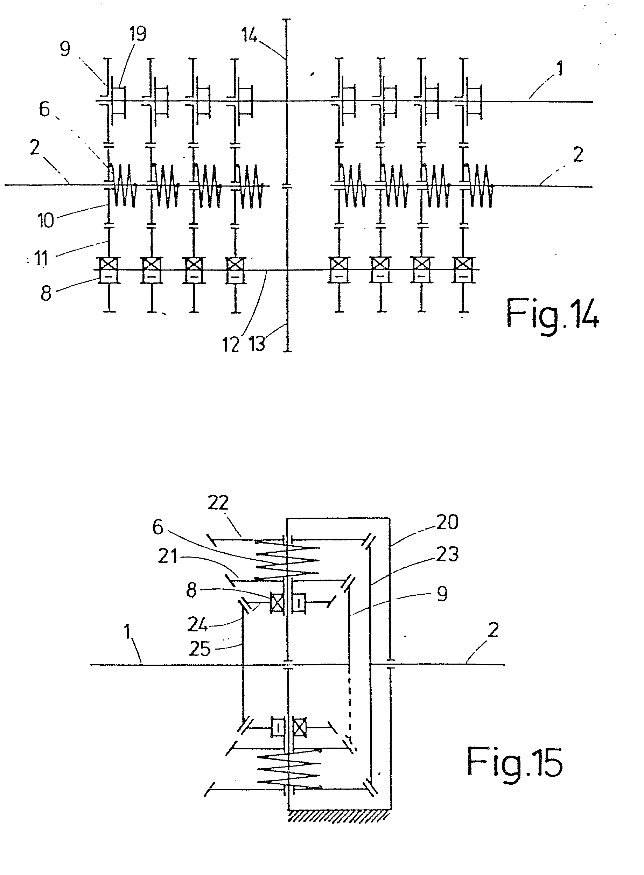

In Figur 14 ist ein erfindungsgemässes stufenloses Ausgleichsgetriebe mit einer Antriebswelle 1, einer Ausgleichswelle 12 und zwei Abtriebswellen 2 mit je vier Federn 6 mit progressiver oder S-förmiger Charakteristik schematisch skizziert. Es entspricht in seiner Wirkungsweise dem Beispiel 2, die Bezugszeichen entsprechen der Figur 6, wobei die Zahnscheiben 9 als Zahnräder ausgebildet sind und die Steuerung des Spannungs- und Entspannungsvorganges mit Hilfe von Schaltkupplungen 19 vorgenommen wird. Diese Änderung gegenüber dem Beispiel 2 ist willkürlich, ebenso hätte auch ein anderes der Beispiele als Grundlage herangezogen werden können.

Das erfindungsgemässe Ausgleichsgetriebe ist der in den meisten Kraftfahrzeugen benutzten Kombination von Schaltgetriebe und Differential-Ausgleichsgetriebe nicht nur durch die stufenlose lastabhängige Übersetzung überlegen, sondern auch dadurch, dass das Drehmoment einer Abtriebswelle 2 auch dann gross bleibt, wenn das der anderen sehr klein ist, also z.B. ein Antriebsrad des Kraftfahrzeugs durchdreht. Diese Eigenschaft wird bei Differentialgetrieben nur unvollkommen durch Sperrvorrichtungen erreicht, die zu einem schlechten Wirkungsgrad führen.

Die Zahl der Abtriebswellen ist bei dem erfindungsgemässen Ausgleichsgetriebe nicht auf zwei begrenzt, sondern kann beliebig vergrössert werden, wobei die Drehmomentanpassung der Abtriebe auch unterschiedlich sein kann. Die Manövriereigenschaften eines Kraftfahrzeugs, das über vier Abtriebswellen alle vier Räder separat antreibt und unabhängige Bremsen für jedes Rad hat, entsprechen etwa den Manövriereigenschaften eines Kraftfahrzeugs, bei dem jedes Rad durch einen unabhängigen Motor angetrieben wird.

Auf ähnliche Weise wie bei dem beschriebenen erfindungsgemässen Ausgleichsgetriebe lassen sich auch erfindungsgemässe Getriebe mit mehreren Antriebswellen bauen, wie sie z.B. bei Antrieben mit mehreren, bei Bedarf zugeschalteten Motoren erforderlich sind.

Beispiel 8

Erfindungsgemässe Federgetriebe lassen sich auch in Form von Einsteg- oder Mehrsteg-Planetengetrieben bauen. Ein erfindungsgemässes Planetengetriebe in kompakter Bauform ist in Figur 15 skizziert. Die Planetenräder bilden hier die parallel arbeitenden Vorrichtungen und sind in möglichst grosser Zahl vorhanden. Zur Vereinfachung der Zeichnung sind in Figur 15 nur zwei der parallel arbeitenden Vorrichtungen mit je drei Planetenrädern 21, 22 und 24 eingezeichnet, wobei die Zahnräder 21 und 22 durch progressive oder S-förmige Federn 6 verbunden sind. Der Antrieb erfolgt über das als Zahnscheibe ausgebildete Sonnenrad 9, der Abtrieb über das Sonnenrad 23. Alle Zahnräder sind in diesem Beispiel als Kegelräder ausgebildet.

Bei ortsfestem Steg 20 werden die Zahnräder 21 von der Zahnscheibe 9 angetrieben, die auf der Antriebswelle 1 sitzt und der in Figur 6 skizzierten Zahnscheibe ähnlich ist. Die Zahnräder 21 werden dabei nacheinander von der Zahnscheibe 9 erfasst, sodass sich die einzelnen Federn 6 stets in verschiedenen Stadien der Spannungs-, Entspannungs- oder Leerlaufphase befinden. Beim Spannungsvorgang wird die gewundene Biegefeder 6 lastabhängig gespannt und treibt über das Zahnrad 22 und das Zahnrad 23, in das alle Zahnräder 22 eingreifen, die Abtriebswelle 2 an. Der Freilauf 8 bleibt während des Spannungsvorganges frei und das Zahnrad 24, das in dauerndem Eingriff mit dem auf der Antriebswelle 1 sitzenden Ausgleichsrad 25 steht, läuft unbelastet mit, wobei seine Drehrichtung der des Zahnrades 21 entgegengesetzt ist. Sobald das Zahnrad 21 den Eingriff in die Zahnscheibe 9 verliert, kehrt sich seine Drehrichtung um und die Entspannungsphase beginnt. Die Feder 6 wirkt nun über die Zahnräder 22 und 23 antreibend auf die Abtriebswelle 2 und über den nun fassenden Freilauf 8 und die Zahnräder 24 und 25 antreibend auf die Antriebswelle 1. Nach der Entspannung der Feder 6 folgt eine Leerlaufphase bis die neue Spannungsphase beginnt.

Das erfindungsgemässe Planetengetriebe hat gegenüber dem in Beispiel 2 beschriebenen Getriebe, das ähnliche Getriebeeigenschaften hat, den Vorteil, dass nur die Zahnräder 21 beim Betrieb ihre Bewegungsrichtung ändern.

Das erfindungsgemässe Planetengetriebe nach Figur 15 kann auch mit nicht ortsfestem Steg 20 betrieben werden. Allerdings sind Antrieb und Abtrieb oder die Drehrichtung nicht beliebig vertauschbar wie bei einem normalen Planetengetriebe. Trotzdem gibt es mehrere sinnvolle Variationsmöglichkeiten, etwa die Umschaltung des Abtriebs von der Welle 2 auf den Steg 20 bei ortsfester Welle 2 und unverändertem Antrieb 1. Durch diese Massnahme wird die Abtriebsdrehrichtung geändert.

Erfindungsgemässe Einsteg- und Mehrsteg-Planetengetriebe bieten eine Vielzahl von Möglichkeiten, die Eigenschaften stufenloser lastabhängiger Federgetriebe bei verschiedenen Grundschaltungen auszunutzen.

Beispiel 9

Die Kombination von erfindungsgemässen stufenlosen lastabhängigen Federgetrieben mit anderen bekannten Getrieben bringt in vielen Fällen weitere Vorteile. In vielen Variationen ist die Kombination von Drehmomentwandlern und Planetengetrieben zu stufenlosen Getrieben bekannt. Dabei wird meist von hydrodynamischen Drehmomentwandlern, aber auch von Reibgetrieben ausgegangen. Da die erfindungsgemässen Federgetriebe gute Drehmomentwandlereigenschaften haben und in Bezug auf den Wirkungsgrad allen bekannten Drehmomentwandlern überlegen sind, können sie mit Vorteil in vielen der bekannten Kombinationen eingesetzt werden.

Beispiel 10

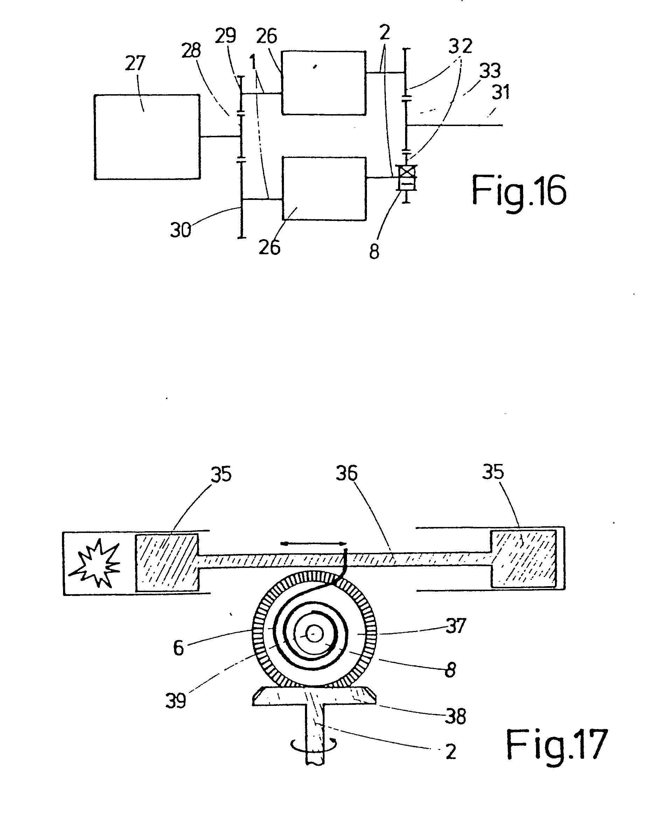

In vielen Variationen ist auch die Kombination von stufenlosen Getrieben und Schaltgetrieben bekannt. Da der Übersetzungsbereich, bei dem ein erfindungsgemässes Federgetriebe mit gutem Wirkungsgrad arbeitet, grösser ist als bei bekannten stufenlosen Getrieben, ist es in den meisten Anwendungsfällen nicht erforderlich, ein zusätzliches Schaltgetriebe zu benutzen. Wenn aber ein extrem weiter Übersetzungsbereich erforderlich ist, etwa bei schweren geländegängigen Kraftfahrzeugen, empfiehlt sich eine Kombination von erfindungsgemässen Federgetrieben mit Schaltgetrieben. Die automatische Steuerung von Schaltgetrieben ist mit relativ grossem Aufwand verbunden. Es ist deshalb interessant, dass aufgrund der Charakteristik erfindungsgemässer Federgetriebe eine Kombination dieser Getriebe mit Verteilergetrieben ohne Schaltelemente möglich ist. In Figur 16 ist ein derartiges erfindungsgemässes Kombinationsgetriebe skizziert. Zur Vereinfachung der Funktionsbeschreibung wird angenommen, dass ein Zweistufenverteilergetriebe mit zwei gleichartigen stufenlosen Federgetrieben 26 nach Beispiel 2 kombiniert ist. Ebenso können auch Mehrstufenverteilergetriebe und/oder unterschiedliche stufenlose Federgetriebe verwendet werden. Verteilergetriebe können sowohl auf der Antriebsseite als auch auf der Abtriebsseite oder auf beiden Seiten der Federgetriebe 26 angebracht sein.

Die in Figur 16 skizzierten stufenlosen Federgetriebe 26 haben eine Getriebecharakteristik, die den mit N gekennzeichneten Kurven der Figur 10 entspricht, ihr Antriebsdrehmoment $M_1$ ist an das Motordrehmoment bei maximaler Motorleistung angepasst. Ein Verbrennungsmotor 27 treibt über die Zahnräder 28 und 29 die Antriebswelle 1 des einen stufenlosen Getriebes 26 mit der Drehzahlübersetzung 1 an und über die Zahnräder 28 und 30 die Antriebswelle 1 des zweiten stufenlosen Getriebes 26 mit einer Drehzahlübersetzung unter 1, z.B. mit 0,2. Die Abtriebswellen 2 der Getriebe 26 treiben die Abtriebswelle 31 des Kombinationsgetriebes über die Zahnräder 32 und 33 an, wobei dem unten gezeichneten Getriebe 26 ein Freilauf 8 einen Energierückfluss über diese Getriebe verhindert. Wird der Motor 27 mit hoher Drehzahl und einem Drehmoment betrieben, das etwa dem bei maximaler Leistung entspricht, so fliesst die ganze Leistung über das in Figur 16 oben gezeichnete Getriebe 26 zur Abtriebswelle 31, das untere stufenlose Getriebe 26 läuft leer mit, der Freilauf 8 ist frei. Wird der Motor 27 mit niedriger Drehzahl und einem Drehmoment betrieben, das in unserm Beispiel dem fünften Teil des Drehmoments bei maximaler Motorleistung entspricht, so fliesst fast die ganze Leistung über das untere stufenlose Getriebe 26 zur Abtriebswelle 31. Das obere Getriebe 26 läuft bei kleiner Drehzahlübersetzung mit und überträgt nur wenig Energie. Beim Übergang von niedriger zu hoher Motorleistung übernimmt das obere stufenlose Getriebe 26 mehr und mehr vom Leistungsfluss, während das untere mehr und mehr abgibt und schliesslich leer läuft.

Bei dem erfindungsgemässen Kombinationsgetriebe ist die Drehzahlübersetzung also nicht nur vom Abtriebsdrehmoment, sondern auch von der Motorleistung abhängig. Bei gleichem Abtriebsdrehmoment kann das Getriebe mit kleiner Motorleistung und kleiner Drehzahlübersetzung oder mit hoher Motorleistung und grosser Drehzahlübersetzung und allen Zwischenstufen mit gutem Wirkungsgrad betrieben werden. Durch richtige Anpassung der Getriebe- an die Motorcharakteristik kann erreicht werden, dass der Motor bei jeder Leistung in einem optimalen Drehzahl- und Drehmomentbereich läuft, wobei insbesondere der Bereich mit gutem Motorwirkungsgrad voll ausgenutzt werden kann.

Beispiel 11

Durch Parallel- oder Serienschaltung von erfindungsgemässen Federgetrieben kann ähnlich wie im Beispiel 10 der Bereich der Drehzahlübersetzung bei gutem Wirkungsgrad vergrössert werden. Durch geeignete Schaltungen lässt sich die Getriebecharakteristik verbessern oder für spezielle Anwendungsfälle einstellen.

## Beispiel 12

In den Beispielen 1 bis 11 werden erfindungsgemässe Federgetriebe beschrieben, die die Drehbewegung von Antriebswellen 1 in andere Drehbewegungen von Antriebswellen 2 übertragen. Liegt die Antriebsbewegung als Hin- und Herbewegung vor, wie z.B. bei einem Verbrennungs- oder Druckkolbenmotor, so kann diese durch eine Kurbelwelle in eine Drehbewegung übertragen werden. Die vom Motor gelieferte periodische Hin- und Herbewegung kann unmittelbar von einem erfindungsgemässen Federgetriebe übernommen werden, wenn mehrere Kolben zeitlich versetzt parallel arbeiten, wie es bei Verbrennungskolbenmotoren üblich ist. Die Kolben sind durch die Kurbelwelle miteinander gekoppelt, sodass in der Entspannungsphase der Getriebefedern die gespeicherte Energie teilweise an den Antrieb zurückgegeben werden kann.

## Beispiel 13

Auf eine Antriebsdrehbewegung kann völlig verzichtet werden, wenn die Kopplung der Kolben von Kolbenmotoren nicht durch Kurbelwellen, sondern mit Hilfe von Hebelsystemen oder ähnlichen nicht drehenden Vorrichtungen erfolgt. Ein besonders einfaches erfindungsgemässes Getriebe dieser Art ist in Figur 17 skizziert, es enthält nur zwei parallel arbeitende Vorrichtungen, von denen nur eine eingezeichnet ist. Die beiden Kolben 35 eines Boxermotors sind durch eine Stange 36 starr miteinander verbunden.

Die periodischen Hin- und Herbewegungen der Stange 36 werden über zwei gegensinnig angebrachte Federn 6 mit progressiver oder S-förmiger Charakteristik und über Freiläufe 8 auf Kegelzahnräder 37 übertragen, die über das Kegelzahnrad 38 die Abtriebswelle 2 bewegen. Bei der Bewegung der Kolbenstange 36 in der einen Richtung wird eine der Federn 6 gespannt und treibt über den zugehörigen Freilauf 8 die Welle 39 und das auf dieser Welle befestigte Zahnrad 37 an, das über das Zahnrad 38 die Abtriebswelle 2 antreibt. Die andere Feder 6 gibt zur gleichen Zeit ihre gespeicherte Energie teilweise an den Antrieb zurück und teilweise über ihren Freilauf 8, die Welle 39 und die Zahnräder 37 und 38 an die Antriebswelle 2, bis bei völliger Federentspannung der Freilauf 8 nicht mehr fasst und die Feder 6 durch die Stange 36 in die Ausgangsposition für die Bewegung in der entgegengesetzten Richtung gezogen wird. Der folgende Gegenschub der Kolbenstange 36 kehrt die Rollen der beiden Federn 6 um. Die beiden Vorrichtungen mit ihren gegensinnig angebrachten Spiralfedern 6 arbeiten in Bezug auf die Abtriebswelle 2 parallel und zwar zeitlich um eine halbe Kolbenschwingung versetzt. Die Hin- und Herbewegungen werden in beiden Richtungen mit Hilfe von Freiläufen und einer geeigneten Anordnung von Zahnrädern auf die sich in einer Richtung drehende Abtriebswelle 2 übertragen.

Die hier beschriebene Zahnradanordnung ist im Prinzip auch für andere erfindungsgemässe Federgetriebe brauchbar, z.B. für das im Beispiel 1 beschriebene, wenn an jeder Schwinge 7 zwei Spiralfedern gegensinnig angebracht werden.

Der einfache Aufbau der im Beispiel 16 beschriebenen Kombination von Kolbenmotor und erfindungsgemässem stufenlosen Federgetriebe kann in vielfältiger Weise variiert werden. Der Federöffnungswinkel kann z.B. dadurch vergrössert werden, dass die Kolbenstange 36 als Zahnstange gespannt und entspannt werden, die durch die Zahnstange bewegt werden. Man kann mehrere Boxermotoren parallel schalten, sodass viele parallel arbeitende Vorrichtungen auf dieselbe Abtriebswelle wirken. Die Zündzeitpunkte wählt man zweckmässigerweise so, dass die Kolben in gleichmässigem Abstand zeitlich versetzt bewegt werden, damit ein möglichst ruhiger Lauf erreicht wird. Anstelle des Boxer-Verbrennungs- oder Druckkolbenmotors können auch andere Arten von Schwingmotoren verwendet werden, insbesondere solche, die sowohl bei der Hin- als auch bei der Herbewegung einen Schub bringen wie z.B. elektrische Schwingankermotoren oder piezoelektrische oder ektromagnetische Schwinger.

Die dreizehn Beispiele können nicht erschöpfend alle vorteilhaften erfindungsgemässen Federgetriebe beschreiben, weil es sehr viele Variationsmöglichkeiten gibt. Kleine Konstruktionsunterschiede, z.B. unterschiedliche Federvorspannung, führen häufig schon zu grossen Unterschieden der Getriebecharakteristik. Andererseits können gleichartige Charakteristiken mit unterschiedlichen Konstruktionen erreicht werden. Dieselben Eigenschaften wie das Getriebe nach Beispiel 10 hat z.B. ein erfindungsgemässes Federgetriebe mit zwei Gruppen von parallel arbeitenden Vorrichtungen mit um den Faktor 5 unterschiedlicher Federcharakteristik, die auf einer gemeinsamen Abtriebswelle gelagert sind und über eine gemeinsame Antriebswelle ohne Verteilergetriebe angetrieben werden.

Alle elastischen Effekte, insbesondere die mit geringen Verlusten, können im Sinne der Erfindung als Federn für die parallel arbeitenden Vorrichtungen ausgenutzt werden. Besonders vorteilhaft ist die Verwendung von hochwertigen Stahl- oder Metallfedern, weil hier die Verluste vernachlässigbar klein sind, hohe Rückstellkräfte bei kleinem Volumen und Gewicht erreicht werden und grosse technische Erfahrungen vorhanden sind. Biegefedern, Drehfedern, Zug- und Druckfedern in allen bekannten Modifikationen können Verwendung finden. Die Federn können an verschiedenen Stellen der parallel arbeitenden Vorrichtungen angebracht sein, es können mehrere Federn parallel oder in Serie verwendet werden, die unterschiedliche Federcharakteristiken haben können und/oder an verschiedenen Stellen angebracht sein können. Gemeinsame Voraussetzung für alle Variationen ist, dass die Federn beim Betrieb des Getriebes periodisch lastabhängig gespannt und entspannt werden und eine progressive oder S-förmige Charakteristik haben.

Die Federn können auch so ausgebildet sein, dass sie gleichzeitig Lagerfunktionen übernehmen. Bei Verwendung von gummielastischem Material ergeben sich einfache Lösungen.

Es können auch Hilfsfedern Verwendung finden, etwa um den Richtungswechsel zu erleichtern oder zur Beeinflussung der Getriebecharakteristik. Die parallel arbeitenden Vorrichtungen können auch durch Hilfsfedern miteinander gekoppelt sein.

Zweckmässig ist die Verwendung von leichten Materialien und kleinen Abmessungen für alle periodisch hin und her bewegten Getriebeteile. Die von diesen Bauteilen während des Betriebes aufgenommene Bewegungsenergie soll klein sein gegenüber der Energie, die von den Federn aufgenommen werden kann. Zwar wird die Rotationsenergie, die z.B. das Zahnrad 10 während des Spannungsvorganges aufnimmt, schliesslich doch von der Feder 6 aufgenommen, aber die beim Entspannungsvorgang aufgenommene Rotationsenergie muss von einem Anschlag aufgenommen werden. Es ist zweckmässig, diesen Anschlag, der z.B. in Figur 8 durch den Bolzen 34 gebildet wird, so auszuführen, dass er elastische und/oder Dämpfungseigenschaften hat. Durch die wechselnden Beschleunigungsvorgänge in erfindungsgemässen Federgetrieben wird eine Geräuschentwicklung verursacht, der durch schlupffreien Lauf der Zahnräder und Lager und durch bekannte Geräuschdämpfungsmassnahmen wie die Verwendung von Metallzahnrädern mit Kunststoffeinlage oder Kunststoffzahnrädern begegnet werden kann.

Viele unterschiedliche Getriebearten können die Grundlage für erfindungsgemässe stufenlose lastabhängige Federgetriebe bilden. Infrage kommen alle Getriebe, die eine Drehbewegung in eine Hin- und Herbewegung mit oder ohne überlagerte Drehbewegung übertragen. Jedes Getriebe zur Übertragung von Drehbewegung kann durch geeignete An- und Abkoppelmassnahmen in ein Getriebe umgewandelt werden, das eine Drehbewegung in eine schubweise Drehbewegung oder in eine Hin- und Herbewegung überträgt. Brauchbar für erfindungsgemässe Federgetriebe sind also alle Rädergetriebe, insbesondere Zahnradgetriebe als Stand- oder Planetengetriebe mit Stirn-, Kegel-, Schnecken- oder Schraubenrändern, aber auch Ketten- und Riemengetriebe. Von Antriebsmotoren gelieferte Hin- und Herbewegungen können direkt von den parallel arbeitenden Vorrichtungen erfindungsgemässer Federgetriebe übernommen werden, wenn sie mehrfach vorliegen, zeitlich versetzt arbeiten und untereinander gekoppelt sind oder gekoppelt werden können. Verbrennungs- und Druckkolbenmotoren mit mehreren Zylindern haben diese Eigenschaften.

Erfindungsgemässe Federgetriebe können aus bekannten Bauteilen wie Zahnrädern, Stahlfedern, Lagern und Freiläufen hergestellt werden, über deren Eigenschaften und Betriebsverhalten viel Erfahrung vorliegt. Während der normalen Lebensdauer eines Kraftfahrzeuges werden die parallel arbeitenden Vorrichtungen eines erfindungsgemässen Federgetriebes ungefähr $10^8$ Lastwechseln ausgesetzt, ein Wert, der von guten Stahlfedern und guten Freiläufen leicht erreicht wird.

**Patentansprüche**

1. Stufenloses lastabhängiges Federgetriebe zur Übersetzung von Drehbewegungen oder periodischen Hin- und Herbewegungen oder einer Kombination von beiden in Drehbewegungen, insbesondere für einen Schwingmotor, mit mindestens einer Abtriebswelle (2) und mehreren in Bezug auf die Abtriebswelle parallel arbeitenden gleichartigen Vorrichtungen, von denen jede die Antriebsbewegung in eine periodische Hin- und Herbewegung umwandelt und entweder die Bewegung in einer Richtung oder die Bewegung in beiden Richtungen bei Richtungsumkehr einer der Richtungen auf die eine Drehbewegung ausführende Abtriebswelle (2) überträgt, wobei die drehenden und die hin und her bewegten Getriebeteile über Federn (6) elastisch so miteinander verbunden sind, dass die Federn (6) periodisch lastabhängig gespannt und entspannt werden und die parallel arbeitenden gleichartigen Vorrichtungen so angeordnet sind oder gesteuert werden, dass die in ihnen enthaltenen Federn (6) sich beim Betrieb des Getriebes in unterschiedlichen Spannungs-, Entspannungs- oder Leerlaufstadien befinden, dadurch gekennzeichnet, dass die Federn (6) wenigstens angenähert eine der folgenden Charakteristiken haben: 1. eine progressive Charakteristik, 2. eine S-förmige Charakteristik mit einer Steigung, die mit zunehmender Auslängung zunächst abnimmt und dann wieder zunimmt.

2. Federgetriebe nach Anspruch 1, dadurch gekennzeichnet, dass die Federcharakteristik durch eine Kombination von mindestens zwei Federn erreicht wird, wobei bei Beanspruchung der Federkombination die einzelnen Federn nacheinander greifen und wirksam werden.

3. Federgetriebe nach Anspruch 1, dadurch gekennzeichnet, dass pneumatische Federn verwendet werden.

4. Federgetriebe nach Anspruch 1, gekennzeichnet durch Vorrichtungen zur Änderung der Federcharakteristik während des Betriebes des Federgetriebes.

5. Federgetriebe nach Anspruch 1, gekennzeichnet durch Vorrichtungen zur Änderung des Steuerungsmodus der Spannungs- und Entspannungsphasen der Federn (6) während des Betriebes des Federgetriebes.

6. Federgetriebe nach Anspruch 1, dadurch gekennzeichnet, dass die Übertragung der Hin- oder der Herbewegung oder beider Bewegungen bei Richtungsumkehr einer der Bewegungen auf die Abtriebswelle (2) mit Hilfe von Schaltkupplungen (19) erfolgt.

7. Federgetriebe nach Anspruch, dadurch gekennzeichnet, dass die im Oberbegriff des Anspruchs 1 angeführten parallel arbeitenden Vorrichtungen vom Antrieb gelieferte Hin- und Herbewegungen übernehmen.

8. Federgetriebe nach Anspruch 1, dadurch gekennzeichnet, dass die Federn (6) eine Vorspannung aufweisen.

## Claims

1. Steplessly variable load dependent spring gearing to transfer rotary motions or periodical to and fro motions or a combination of both motions into rotary motions, especially for an oscillating motor, with at least one driven shaft (2) and several with regard to the driven shaft parallel working devices of the same kind, each of which changes the driving motion into a periodical to and fro motion and transfer either the motion in one direction or the motion in both directions by changing one of the directions to the rotating driven shaft (2), with the rotating and the to and fro oscillating parts of the gearing are elastically connected with each other by springs (6) so that the springs (6) are stretched and released periodically and the parallel working devices are constructed or regulated so that the springs (6) contained are in different stages of stretching, releasing or idling, when the gearing is running, characterised by springs (6) with a characteristic, which at least approximates one of the following characteristics:
1. a progressive characteristic
2. a S-shaped characteristic with a gradient, which is descending first and then ascending with rising strain.

2. Spring gearing as in claim 1 characterised by a combination of at least two springs to approximate the spring-characteristic, with the individual springs seize and work successively, when the spring-combination is strained.

3. Spring gearing as in claim 1 characterised by the application of pneumatic springs.

4. Spring gearing as in claim 1 characterised by devices for changing the spring-characteristic during the running of the spring gearing.

5. Spring gearing as in claim 1 characterised by devices for changing the mode of regulation of stretching and releasing the springs during the running of the springs gearing.

6. Spring gearing as in claim 1 characterised by transfering the to-motion or the fro-motion or both motions by changing the direction of one of the motions to the driven shaft (2) with help of engaging and disengaging clutches (19).

7. Spring gearing as in claim 1 characterised by taking over the to and fro motion of the motor by the parallel working devices mentioned in claim 1.

8. Spring gearing as in claim 1 characterised by an initial tension of the spring (6).

## Revendications

1. Transmission continue à ressort dépandante de la charge pour la transmission des rotations ou des mouvements de va-et-vient périodiques ou une combinaison des deux en rotations, particulièrement pour un moteur à mouvement alternativ, avec au moins un arbre de sortie (2) et plusieurs mécanismes similaires travaillant parallèlement par rapport à l'arbre de sortie dont chacun convertit le mouvement de commande en un mouvement de va-et-vient périodique et transmet soit le mouvement dans une direction soit le mouvement dans les deux directions avec inversion du sens d'une direction à l'arbre de sortie (2) tournant, et les pièces à va-et-vient et pièces tournantes de transmission étant liées résilient par ressorts (6) de sorte que les ressorts (6) sont tendus et relâchés périodiquement dépendant de la charge et les mécanismes similaires travaillant parallèlement étant aménagés ou commandés de sorte que les ressorts (6) qu'ils contiennent sont dans des phases différentes de tension, de relâchement ou de marche à vide, caractérisée en ce que les ressorts (6) ont du moins approximativement une des caractéristiques suivantes:
1. une caractéristique progressive
2. une caractéristique en forme de S avec une pente ascendante qui, suivant l'allongement grandissant, diminue d'abord et puis grandit encore.

2. Transmission à ressort selon revendication 1, caractérisée en ce que la caractéristique des ressorts est réalisée par une combinaison de deux ressort au minimum dont les ressorts individuels prennent et agissent successivement sous charge.

3. Transmission à ressort selon revendication 1, caractérisée en ce qu'on utilise des ressorts pneumatiques.

4. Transmissions à ressort selon revendication 1, caractérisée par des mécanismes pour la modification de la caractéristique des ressorts pendant que la transmission à ressort travaille.

5. Transmission à ressort selon revendication 1, caractérisée par des mécanismes qui modifient le mode de réglage des phases de tension et de relâchement des ressorts pendant que la transmission à ressort travaille.

6. Transmission à ressort selon revendication 1, caractérisée en ce que la translation du mouvement vers l'avant ou vers l'arrière ou de ces deux mouvements avec inversion du sens de l'un des deux mouvements à l'arbre de sortie (2) se fait à l'aide d'embrayages (19).

7. Transmission à ressort selon revendication 1, caractérisée en ce que les mécanismes travaillant parallèlement mentionnés dans le préamble de la revendication 1 reçoivent des mouvements de va-et-vient de l'entraînement.

8. Transmission à ressort selon revendication 1, caractérisée en ce que les ressorts (6) ont une tension initiale.

Fig.1

Fig.2

0021452

Fig.3

Fig.4

15

Fig.5

Fig.6

Fig.7

Fig.8

Fig.9

Fig.10

Fig.11

Fig.12

Fig.13

Fig.14

Fig.15

Fig.16

Fig.17